# EUROPÄISCHE PATENTSCHRIFT

(11) **EP 2 827 043 B1**
(45) Veröffentlichungstag und Bekanntmachung des Hinweises auf die Patenterteilung: **01.06.2016**
(21) Anmeldenummer: 14002073.6
(22) Anmeldetag: 16.06.2014
(51) Int. Cl.: F16S 3/02, E04C 3/07, E01B 25/24, B21D 47/01, E04C 3/09

(54) **Verfahren zur Herstellung einer Doppelschiene sowie Doppelschiene**
Method for producing a twin rail and twin rail
Procédé de fabrication d'un rail double et rail double

(30) Priorität: 18.07.2013 DE 102013011966
(43) Veröffentlichungstag der Anmeldung: 21.01.2015
(73) Patentinhaber: Welser Profile Austria GmbH, 3341 Ybbsitz (AT)
(72) Erfinder: Enöckl, Walter, 3340 Waidhofen an der Ybbs (AT); Spreitzer, Erich, 3341 Ybbsitz (AT)
(74) Vertreter: Grünecker Patent- und Rechtsanwälte PartG mbB

(56) Entgegenhaltungen:
- EP-A2- 2 006 460
- DE-A1- 3 900 047
- FR-A1- 2 528 462
- FR-A2- 2 579 640
- GB-A- 2 139 666

## Beschreibung

Die vorliegende Erfindung betrifft ein Verfahren zur Herstellung einer Doppelschiene nach dem Oberbegriff des unabhängigen Anspruchs 1 und eine Doppelschiene nach dem Oberbegriff des unabhängigen Anspruchs 8.

Montageschienen werden beispielsweise dazu eingesetzt, um Decken abzuhängen oder Rohre oder dergleichen an Wänden und Decken zu befestigen. Bei einfachen Montageschienen handelt es sich um C-förmige Metallprofile. An der Öffnungsseite weisen die Metallprofile links und rechts des Öffnungsschlitzes jeweils einen Rand auf, der in Richtung des Öffnungsschlitzes oder sogar in das Innere des Profils umgebogen sein kann, so dass ein in die Montageschiene eingesetztes Montageelement die umgebogenen Längsränder hintergreift. Es gibt jedoch auch Montageschienen, bei welchen die Ränder links und rechts des Öffnungsschlitzes nicht nach Innen umgebogen sind.

Neben den einfachen C-förmigen Montageschienen sind am Markt auch sogenannte Doppelschienen verfügbar. Eine Doppelschiene besteht im Wesentlichen aus zwei Schienen, deren Öffnungsseiten in entgegengesetzte Richtungen zeigen. Doppelschienen kommen immer dann zum Einsatz, wenn flexible Befestigungsmöglichkeiten auf zwei gegenüberliegenden Seiten der Montageschiene gefordert sind.

Doppelschienen können auf unterschiedliche Art und Weise hergestellt werden. Beispielsweise ist es möglich, Doppelschienen in einem Arbeitsgang als Strangpressprofile herzustellen. Aus DE 202007003275 U1 ist eine als Strangpressprofil hergestellte Montageschiene mit rechteckigem Querschnitt bekannt. Bei dieser Montageschiene ist auf jeder der vier Seiten des rechteckigen Profils eine Nut zur Befestigung von eingreifenden Montageelementen ausgebildet. Das Strangpressverfahren ist relativ kostenaufwendig und eignet sich i. d. R. nur zur Herstellung von Aluminiumprofilen.

Ferner ist es bekannt, eine Doppelschiene aus zwei einfachen C-förmigen Montageschienen zusammenzusetzen. Die DE 3900047 A1 zeigt eine Doppelschiene bestehend aus zwei C-förmigen Montageschienen, die rückseitig miteinander verschraubt sind. Aus DE 29900876°U1 ist es bekannt, zwei C-förmige Montageschienen miteinander zu vernieten. Die DE 2001571 U1 zeigt eine Doppelschiene, bestehend aus zwei C-förmigen Montageschienen, die durch ein Z-förmiges Versteifungselement miteinander verbunden werden. Die Verbindung zwischen den beiden Montageschienen und dem dazwischen angeordneten Versteifungselement kann punktförmig mittels Nieten oder Schrauben hergestellt werden. Es ist beschrieben, dass auch eine stoffschlüssige Verbindung, beispielsweise durch Kleben, Schweissen oder Löten möglich ist. Aus DE 29917734 U1 ist ferner ein Verfahren bekannt, bei dem zwei C-förmige Montageschienen über Seitenteile miteinander verschweißt werden.

Die herkömmlichen Verfahren zur Verbindung zweier einfacher C-förmiger Montageschienen erfordern einen relativ hohen Materialeinsatz und sind unwirtschaftlich. Zudem ist eine Doppelschiene, bestehend aus zwei rückseitig miteinander verbundenen C-förmigen Montageschienen trotz des hohen Materialeinsatzes nicht besonders stabil bzw. biegesteif, da sich ein Großteil des Materials, nämlich die beiden miteinander verbundenen Rückseiten der Montageschienen, in der Symmetrieebene der Doppelschiene befindet.

Aus WO 2011/145921 A1 ist ein Verfahren zur Herstellung einer Doppelschiene durch Stanzen und Profilieren eines einzigen Blechstreifens bekannt. Eine Doppelschiene, die gemäß diesem Verfahren hergestellt wurde, weist jedoch zumindest an einer ihrer beiden Öffnungsseiten mehrere Verbindungsstege auf, die in Längsrichtung der Doppelschiene voneinander beabstandet sind. Zumindest eine der beiden Schienen der Doppelschiene verfügt daher nicht über einen durchgehenden Öffnungsschlitz. Ein in diese Schiene eingesetztes Montageelement kann somit in Längsrichtung nicht beliebig verstellt werden.

Aufgabe der vorliegenden Erfindung ist es, ein Verfahren anzugeben, mit dem sich eine stabile Doppelschiene möglichst schnell und kostengünstig herstellen lässt. Das Verfahren soll insbesondere die Herstellung äußerst stabiler Doppelschienen bei möglichst geringem Materialeinsatz ermöglichen. Es ist ferner Aufgabe der vorliegenden Erfindung, eine entsprechende Doppelschiene anzugeben.

Die Aufgabe wird gelöst durch die Merkmale des unabhängigen Anspruchs 1. Demnach liegt bei einem gattungsgemäßen Verfahren dann eine erfindungsgemäße Lösung vor, wenn aus dem Metallblech vor, während oder nach der Profilherstellung voneinander in Längsrichtung der späteren Doppelschiene beabstandete Befestigungsabschnitte herausgebogen werden, wobei die beiden Profile miteinander verbunden werden, indem die Befestigungsabschnitte eines ersten Profils an den Befestigungsabschnitten eines zweiten Profils befestig werden.

Das erfindungsgemäße Verfahren ermöglicht es, die beiden Profile, aus welchen die Doppelschiene zusammengesetzt ist, nicht mehr vollflächig miteinander zu verbinden, sondern lediglich über die aus dem Profil bzw. aus dem Blech des Profils herausgebogenen Befestigungsabschnitte, die beispielsweise als Laschen ausgebildet sein können. Einander zugewandte Bereiche der beiden Profile verlaufen daher beabstandet voneinander, wodurch zum einen insgesamt weniger Material benötigt wird, und sich zum anderen auch die Steifigkeit der Doppelschiene erhöht. Es wird darauf hingewiesen, dass die beiden Profile nicht zwangsweise jeweils eine der beiden Schienen bilden müssen. Vielmehr können die beiden Schienen auch jeweils zur Hälfe durch eines der beiden Profile, und zur anderen Hälfte durch das andere Profil gebildet werden. Die durch das erfindungsgemäße Verfahren hergestellte Doppelschiene ist vorzugsweise derart ausgebildet, dass die Öffnungsschlitze der beiden Schienen in entgegengesetzte Richtungen weisen. Die Längsränder der beiden Flanken einer Schiene sind vorzugsweise aufeinander zu, und weiter vorzugsweise nach Innen, also in den Innenraum der Schiene umgebogen, so dass sie ein in die Schiene eingesetztes Montageelement hintergreifen können. Das "Herausbiegen" der Befestigungsabschnitte aus dem Metallblech der beiden Profile ist als breiter Begriff auszulegen. Herausbiegen kann in diesem Zusammenhang beispielsweise Prägen, Umbiegen, (beidseitig) Kröpfen, Tiefziehen usw. bedeuten. Die Befestigungsabschnitte werden vorzugsweise derart aus dem Metallblech herausgebogen, dass sie beabstandet und parallel zu dem Blechabschnitt verlaufen, aus dem sie herausgebogen wurden.

Bevorzugte Ausführungsformen der vorliegenden Erfindung sind Gegenstand der Unteransprüche.

In einer besonders bevorzugten Ausführungsform des erfindungsgemäßen Verfahrens werden die jeweils zu verbindenden Befestigungsabschnitte der beiden Profile mittels Durchsetzfügen aneinander befestigt. Geeignete Durchsetzfügeverfahren sind unter anderem unter den Begriffen Toxen und Clinchen bekannt. Die Befestigungsabschnitte der beiden Profile können grundsätzlich zwar auch miteinander vernietet oder verschraubt werden. Das Durchsetzfügen eignet sich jedoch im Besonderen bei dem erfindungsgemäßen Verfahren, da hierdurch insgesamt eine bis zu dreimal höhere Verarbeitungsgeschwindigkeit erzielt werden kann. Alternativ können die Befestigungsabschnitte der beiden Profile auch miteinander verschweisst werden, vorzugsweise mittels Laser. Auch ist es denkbar, die Befestigungsabschnitte miteinander zu verkleben oder zu verlöten.

In einer weiteren besonders bevorzugten Ausführungsform der vorliegenden Erfindung werden die Befestigungsabschnitte vor oder beim Herausbiegen teilweise aus dem Metallblech ausgeschnitten. Dadurch wird das Herausbiegen der Befestigungsabschnitte erleichtert. Auch wird dadurch verhindert, dass sich angrenzende Bereiche des noch unverformten Metallblechs oder des bereits erstellten Profils beim Herausbiegen der Befestigungsabschnitte verformen. Die Befestigungsabschnitte können beispielsweise aus dem Metallblech teilweise ausgestanzt werden. Grundsätzlich ist es jedoch auch möglich, das Metallblech im Bereich der zu erstellenden Befestigungsabschnitte nicht einzuschneiden, sondern die Befestigungsabschnitte im Prägeverfahren, bzw. Tiefziehverfahren aus dem Metallblech herauszubiegen.

Vorzugsweise wird das Metallblech an zwei gegenüberliegenden Seiten des Befestigungsabschnitts eingeschnitten, wobei der Befestigungsabschnitt mittels Tiefziehen aus dem Blech herausgebogen wird, so dass ein beidseitig gekröpfter Befestigungsabschnitt entsteht. Durch diese Ausführungsform des erfindungsgemäßen Verfahrens lassen sich Befestigungsabschnitte herstellen, die erstens in sich selbst stabil sind und zweitens stabil mit dem Blechabschnitt verbunden sind, aus dem sie herausgebogen wurden. Hieraus Dadurch weist auch die fertiggestellte Doppelschiene eine hohe Stabilität auf.

Alternativ ist es möglich, das Metallblech an drei zusammenhängenden Seiten des Befestigungsabschnitts einzuschneiden, wobei der Befestigungsabschnitt als Lasche aus dem Metallblech herausgebogen wird. Im Gegensatz zu den oben beschriebenen beidseitig gekröpften Befestigungsabschnitten ist die Lasche zwar nur an einer Seite mit dem Metallblech verbunden, aus dem sie herausgebogen wurde. Es wird daher keine so hohe Stabilität erreicht. Der Biegevorgang lässt sich jedoch leichter bewerkstelligen. Außerdem bestehen größere Gestaltungsmöglichkeiten, insbesondere hinsichtlich der Ausrichtung der aus dem Metallblech herausgebogenen Lasche.

In einer weiteren bevorzugten Ausführungsform des erfindungsgemäßen Verfahrens erfolgt das Ausschneiden und Herausbiegen der Befestigungsabschnitte in einer Stanzpresse. Eine Stanzpresse bietet hohe Genauigkeit und schnellen Durchsatz. Ferner können die Prozesse des Ausschneidens und Herausbiegen der Befestigungsabschnitte in der Stanzpresse in einem Arbeitsgang erfolgen.

In einer weiteren bevorzugten Ausführungsform des erfindungsgemäßen Verfahrens erfolgt die Profilherstellung durch Kaltwalzprofilierung. Dadurch wird ein kostengünstiges Verfahren erzielt, das darüber hinaus auch noch eine sehr hohe Verarbeitungsgeschwindigkeit erlaubt.

Für den Gesamtverfahrensablauf haben sich zwei vorteilhafte Alternativen bewährt. Bei der ersten Alternative wird das bandförmige Metallblech zunächst in einer Profilieranlage mit einer Vorstanzpresse im Bereich der Befestigungsabschnitte eingeschnitten. Im gleichen Arbeitsgang werden die Befestigungsabschnitte im Tiefziehverfahren aus der Blechebene herausgebogen. Das vorgestanzte, mit den Befestigungsabschnitten versehene Metallband wird sodann in einem kontinuierlichen Kaltwalzverfahren zum Profil gewalzt. In einem zweiten Offline-Prozess werden zwei abgelängte Profile zusammengeführt und an den herausgebogenen Befestigungsabschnitten miteinander verbunden. Wie bereits oben erwähnt, erfolgt die Verbindung vorzugsweise mittels Durchsetzfügen. Die Profile können jedoch auch miteinander verschweißt, verlötet oder verklebt werden.

In einem zweiten alternativen Prozess wird das bandförmige Metallblech zunächst im kontinuierlichen Kaltwalzverfahren zum Profil gewalzt. Es schließt sich ein Offline-Prozess an, in dem die Profile zusammengeführt, gestanzt, tiefgezogen und mittels Durchsetzfügen miteinander verbunden werden.

Die Aufgabe wird ferner gelöst durch die Merkmale des unabhängigen Anspruchs 8, der eine Doppelschiene gemäß der vorliegenden Erfindung definiert.

In einer besonders bevorzugten Ausführungsform ist die Doppelschiene so ausgeführt, dass das erste Profil eine erste Flanke der ersten Schiene sowie eine erste Flanke der zweiten Schiene bildet, wobei das zweite Profil eine zweite Flanke der ersten Schiene sowie eine zweite Flanke der zweiten Schiene bildet. Bei dieser Ausführungsform ist zur Herstellung der Doppelschiene weniger Umformarbeit erforderlich als bei einer Doppelschiene, die aus zwei Profilen zusammengesetzt ist, die jeweils eine der beiden Schienen bilden.

Die Stabilität bzw. Biegesteifigkeit kann erhöht werden, wenn jedes der beiden Profile zwischen den durch das jeweilige Profil gebildeten Flanken einen in Richtung auf das jeweils andere Profil hin zulaufenden Abschnitt aufweist. Dabei ist es in Bezug auf die Stabilität insbesondere von Vorteil, wenn der in Richtung auf das jeweils andere Profil hin zulaufende Abschnitt beidseitig gekröpft ausgebildet ist. Dieser Abschnitt kann beispielsweise V-förmig oder hutförmig ausgebildet sein. Im letzteren Fall werden die beiden Profile vorzugsweise so zusammengesetzt, dass ein mittlerer Teil des hutförmigen Abschnitts des ersten Profils parallel zu dem mittleren Teil des hutförmigen Abschnitts des zweiten Profils verläuft. Um die beiden Profile exakt zueinander zu positionieren, ist es allgemein von Vorteil, wenn der auf das zweite Profil hin zulaufende Abschnitt des ersten Profils zumindest abschnittsweise parallel zu dem auf das erste Profil hin zulaufenden Abschnitt des zweiten Profils verläuft.

In einer weiteren besonders bevorzugten Ausführungsform der vorliegenden Erfindung sind die aus dem Metallblech herausgebogenen Befestigugsabschnitte in dem auf das jeweils andere Profil hin zulaufenden Abschnitts ausgebildet. Die Befestigungsabschnitte stehen dabei von dem auf das jeweils andere Profil hin zulaufenden Abschnitt nochmals weiter in Richtung auf das jeweils andere Profil ab.

In einer weiteren besonders bevorzugten Ausführungsform der vorliegenden Erfindung sind die aus dem Metallblech herausgebogenen und voneinander in Längsrichtung des jeweiligen Profils beanstandeten Befestigungsabschnitte quer zur Längsrichtung des Profils zumindest teilweise unterschiedlich positioniert. Dadurch wird eine höhere Stabilität der Doppelschiene erreicht. Besonders bevorzugt weist jedes der beiden Profile in Längsrichtung des Profils betrachtet auf gleicher Position jeweils zwei Befestigungsabschnitte auf, wobei die beiden auf gleicher Position befindlichen Befestigungsabschnitte quer zur Längsrichtung des Profils voneinander beabstandet sind.

Die beiden Profile, die zur Doppelschiene zusammengesetzt werden, sind vorzugsweise in ihrer Form identisch. Dies hat den Vorteil, dass die beiden Profile auf einfache Weise hergestellt werden können. Beispielsweise ist es möglich, die beiden Profile durch Ablängen eines im Endlosverfahren hergestellten Profils zu erhalten.

Die Erfindung wird im Folgenden anhand von Zeichnungen näher erläutert. Es zeigen:
- Fig. 1: ein erstes Ausführungsbeispiel einer erfindungsgemäß hergestellten Doppelschiene in Schrägansicht,
- Fig. 2: den Querschnitt der erfindungsgemäßen Doppelschiene aus Fig. 1,
- Fig. 3: eine Draufsicht auf die erfindungsgemäße Doppelschiene aus den Fig. 1 und 2,
- Fig. 4: einen ersten Verfahrensschritt eines erfindungsgemäßen Verfahrens zur Herstellung einer Doppelschiene, bei dem ein Metallband in einer Stanzpresse vorgestanzt wird,
- Fig. 5: Presswerkzeug und Metallband aus Fig. 4 in einer perspektivischen Darstellung,
- Fig. 6: den Querschnitt des vorgestanzten Metallbandes,
- Fig. 7: einen nächsten Verfahrensschritt des erfindungsgemäßen Verfahrens, bei dem das vorgestanzte Metallband im Kaltwalzverfahren zu einem Profil geformt wird,
- Fig. 8: das fertig gestellte, kaltgewalzte Profil in einer Schrägansicht,
- Fig. 9: den Querschnitt des Profils aus Fig. 8,
- Fig. 10: einen nächsten Verfahrensschritt des erfindungsgemäßen Verfahrens, bei dem zwei abgelenkte Profile zur Doppelschiene zusammengesetzt werden,
- Fig. 11: den letzten Verfahrensschritt des erfindungsgemäßen Verfahrens, bei dem die beiden Profile mittels Durchsetzfügen miteinander befestigt werden,
- Fig. 12: ein weiteres Ausführungsbeispiel einer erfindungsgemäß hergestellten Doppelschiene in Schrägansicht,
- Fig. 13: den Querschnitt der erfindungsgemäßen Doppelschiene aus Fig. 12,
- Fig. 14: ein weiteres Ausführungsbeispiel einer erfindungsgemäß hergestellten Doppelschiene in Schrägansicht,
- Fig. 15: eine weitere Schrägansicht der erfindungsgemäßen Doppelschiene aus Fig. 14,
- Fig. 16: den Querschnitt der erfindungsgemäßen Doppelschiene aus den Fig. 14 und 15, und
- Fig. 17: die beiden Profile der Doppelschiene aus den Fig. 14 bis 16 vor dem Fügeprozess.

Für die folgenden Ausführungen gilt, dass gleiche Teile durch gleiche Bezugszeichen bezeichnet sind. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

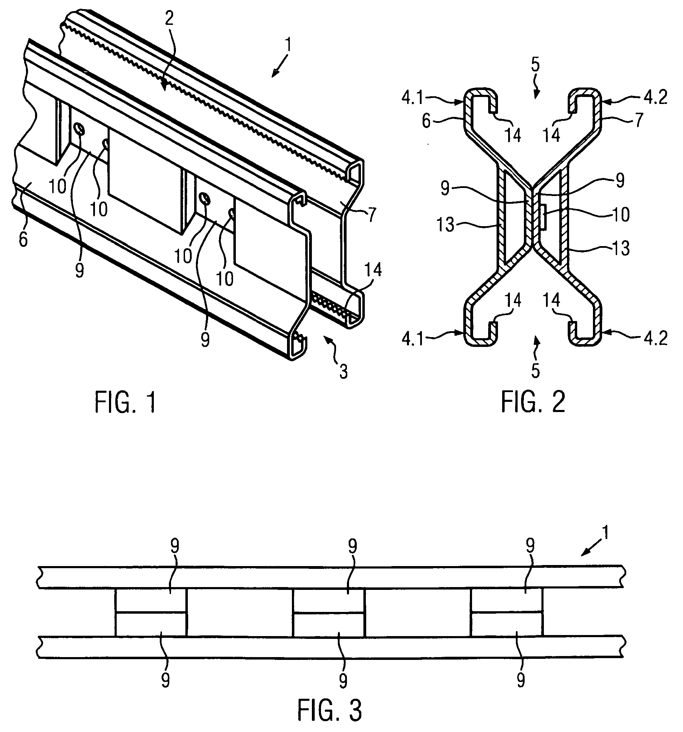

Die Fig. 1 bis 3 zeigen eine erfindungsgemäße Doppelschiene 1, die aus zwei Profilen 6 und 7 zusammengesetzt ist. Die Doppelschiene weist eine erste Schiene 2 und eine zweite Schiene 3 auf. Die beiden Schienen sind an gegenüberliegenden Seiten der Doppelschiene angeordnet. Die in Fig. 2 gezeigten Öffnungsschlitze 5 der beiden Schienen 2 und 3 weisen somit in entgegengesetzte Richtungen. Durch die Öffnungsschlitze 5 können eingreifende Montageelemente in die beiden Schienen 2 und 3 eingesetzt werden. Jede der beiden Schienen 2 und 3 weist eine erste linke Flanke 4.1 sowie eine zweite rechte Flanke 4.2 auf. Die beiden Flanken 4.1 und 4.2 definieren zwischen sich den Öffnungsschlitz 5 der jeweiligen Schiene. In Fig. 2 ist zu erkennen, dass die Längsränder 14 der beiden Flanken 4.1 und 4.2 in das Innere der jeweiligen Schiene umgebogen sind. Ein in die jeweilige Schiene eingesetztes Montageelement ist vorzugsweise so ausgestaltet, dass es die beiden Längsränder 14 der beiden Flanken 4.1 und 4.2 hintergreift. Um zu verhindern, dass das Montageelement im montierten Zustand verrutscht, sind die Längsränder 14 gezahnt ausgeführt. Dies ist in Fig. 1 zu erkennen.

Das erste Profil 6 bildet sowohl die linke Flanke 4.1 der oberen Schiene 2 als auch die linke Flanke 4.1 der unteren Schiene 3. Die jeweils rechte Flanke 4.2 der beiden Schienen 2 und 3 wird durch das zweite Profil 7 gebildet. Fig. 2 zeigt, dass die beiden Profile 6 und 7 symmetrisch angeordnet und jeweils als beidseitig gekröpftes Hutprofil ausgebildet sind. Jedes der beiden Profile weist daher einen in Richtung auf das jeweils andere Profil hin zulaufenden Abschnitt 13 auf. Dieser Abschnitt befindet sich beim ersten Profil 6 mittig zwischen den beiden Flanken 4.1, und beim zweiten Profil 7 mittig zwischen den beiden Flanken 4.2. Die beiden aufeinander zulaufenden Abschnitte 13 des ersten Profils 6 und des zweiten Profils 7 verlaufen in einem mittleren Bereich der Doppelschiene 1 parallel zueinander, berühren sich jedoch nicht, sondern sind voneinander beabstandet. Die beiden Profile 6 und 7 sind über Befestigungsabschnitte 9 miteinander verbunden, die aus dem Hutprofil herausgebogen bzw. herausgeprägt sind. Die Fig. 1 und 3 zeigen, dass die Befestigungsabschnitte 9 in regelmäßigen Abständen voneinander in Längsrichtung in der Doppelschiene beabstandet ausgebildet sind. Die Befestigungsabschnitte 9 des ersten Profils 6 sind mit den Befestigungsabschnitten 9 des zweiten Profils 7 mittels Durchsetzfügeverbindungen miteinander verbunden. Die Durchsetzfügeverbindungen sind in den Fig. 1 und 2 mit dem Bezugszeichen 10 gekennzeichnet.

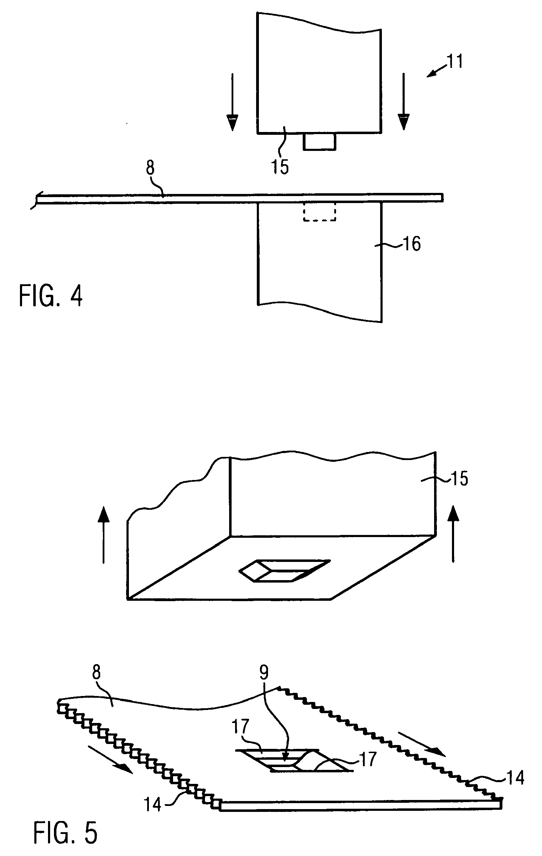

Anhand der Fig. 4 bis 11 wird im Folgenden das Verfahren zur Herstellung der in den Fig. 1 bis 3 gezeigten Doppelschiene 1 erläutert. Wie in den Fig. 4 und 5 gezeigt ist, werden zunächst die Befestigungsabschnitte 9 der späteren Profile 6 und 7 mittels einer Stanzpresse 11 in ein längliches Metallband 8 eingebracht. Das Metallband 8 wird hierzu intermittierend durch die Stanzpresse 11 geführt. Durch Zusammenwirken des Pressenstempels 15 und der Tiefziehmatrize 16 wird das Blech in einem Arbeitsgang eingeschnitten und tiefgezogen, so dass der in Fig. 5 gezeigte Befestigungsabschnitt 9 entsteht. Die dabei entstehenden Schnittkanten sind in Fig. 5 mit dem Bezugszeichen 17 gekennzeichnet. Die ebenfalls in Fig. 5 gezeigten, gezahnten Längsränder 14 des Metallbandes 8 können entweder in einem zuvor stattfindenden Verfahrensschritt oder aber in einem Arbeitsgang mit Hilfe der Stanzpresse 11 hergestellt werden.

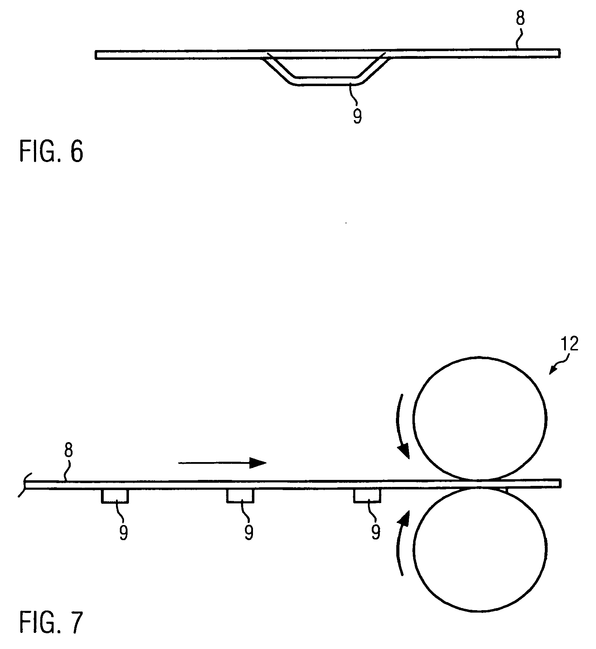

Fig. 6 zeigt einen Querschnitt des vorgestanzten Metallbands 8. Hier ist die Form der in der Stanzpresse erzeugten, beidseitig gekröpften und aus der Blechebene herausgebogenen Befestigungsabschnitte 9 deutlich zu erkennen.

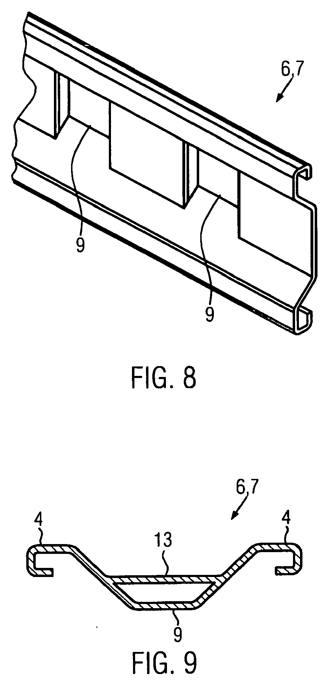

Fig. 7 zeigt, dass der vorgestanzte Blechstreifen 8 im nächsten Verfahrensschritt in einem Kaltwalzwerk 12 zu dem gewünschten Profil umgeformt wird. Das Kaltwalzwerk 12 ist in Fig. 7 lediglich schematisch dargestellt. Fig. 8 zeigt eine Schrägansicht des fertig gestellten Profils. Dieses wird im Anschluss an die Kaltwalzprofilierung lediglich abgelängt, um die beiden für die Herstellung der Doppelschiene benötigten Profile 6 und 7 in der gewünschten Länge zu erhalten. Fig. 9 zeigt den Querschnitt dieses Profils.

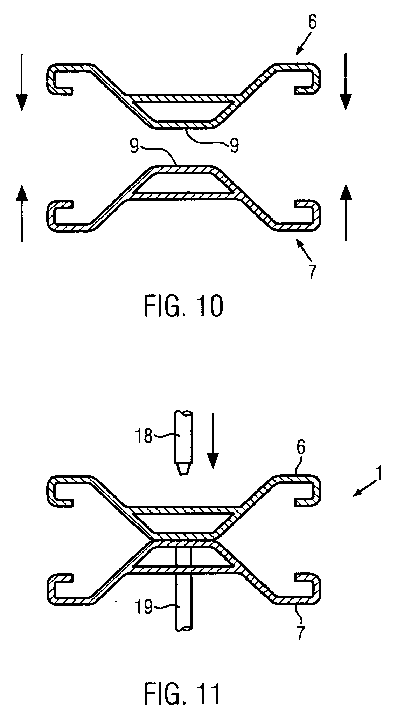

Im letzten Verfahrensschritt werden die beiden Profile 6 und 7 zusammengeführt und im Bereich der Befestigungsabschnitte 9 aneinander befestigt. Dieser Vorgang ist in den Fig. 10 und 11 dargestellt. Fig. 11 zeigt, dass die Befestigungsabschnitte der beiden Profile 6 und 7 vor dem eigentlichen Fügeprozess flach aufeinander zu liegen kommen. Die Befestigung erfolgt durch Zusammenpressen des Durchsetzfügestempels 18 und der Durchsetzfügematrize 19. In einer entsprechend großen Anlage können mehrere Durchsetzfügeverbindungen gleichzeitig erstellt werden. Es ist jedoch auch möglich, die Fügepunkte einzeln zu setzen oder die Befestigungsabschnitte auf andere Weise miteinander zu verbinden, beispielsweise im Laserschweißverfahren.

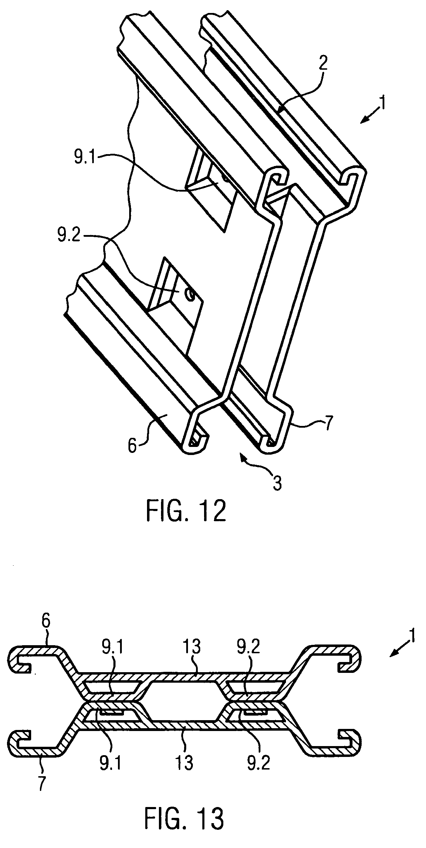

Die Fig. 12 und 13 zeigen ein weiteres Ausführungsbeispiel einer erfindungsgemäßen Doppelschiene 1. Diese Doppelschiene unterscheidet sich von der Schiene aus den Fig. 1 bis 3 dadurch, dass die beiden Schienen 2 und 3 der Doppelschiene einen größeren Abstand zueinander aufweisen. Die Doppelschiene ist demnach höher als beim Ausführungsbeispiel aus den Fig. 1 bis 3. Die Doppelschiene wird dadurch biegesteifer. Die Hutprofile 6 und 7 sind bei dem Ausführungsbeispiel aus den Fig. 12 und 13 breiter ausgeführt, so dass in die beiden Profile auf gleicher Position in Längsrichtung der Doppelschiene betrachtet jeweils zwei Befestigungsabschnitte 9.1 und 9.2, welche quer zur Längsrichtung der Doppelschiene voneinander beabstandet sind, eingebracht werden können. Der sonstige Aufbau der Doppelschiene entspricht dem Aufbau der Doppelschiene aus den Fig. 1 bis 3. Auch die Doppelschiene gemäß den Fig. 12 und 13 kann gemäß dem bereits zuvor erläuterten Herstellungsverfahren hergestellt werden.

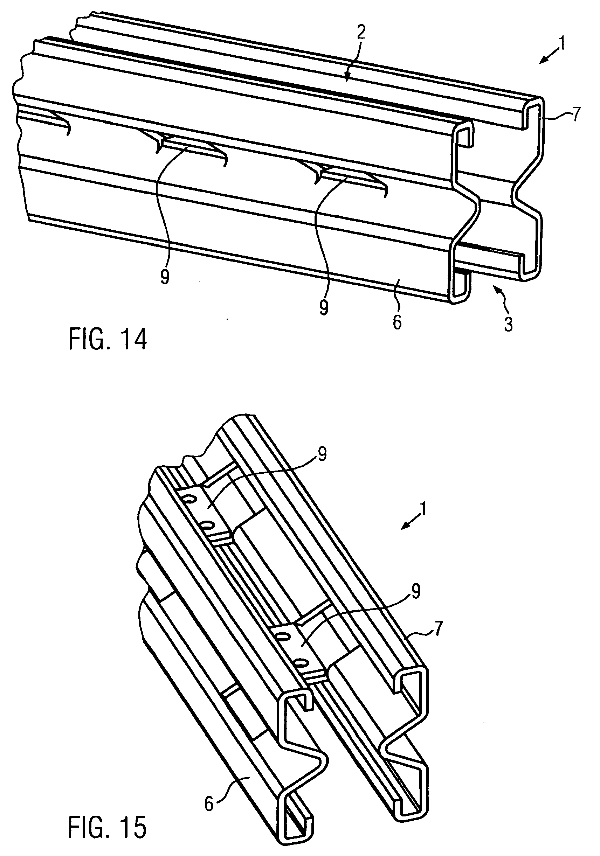

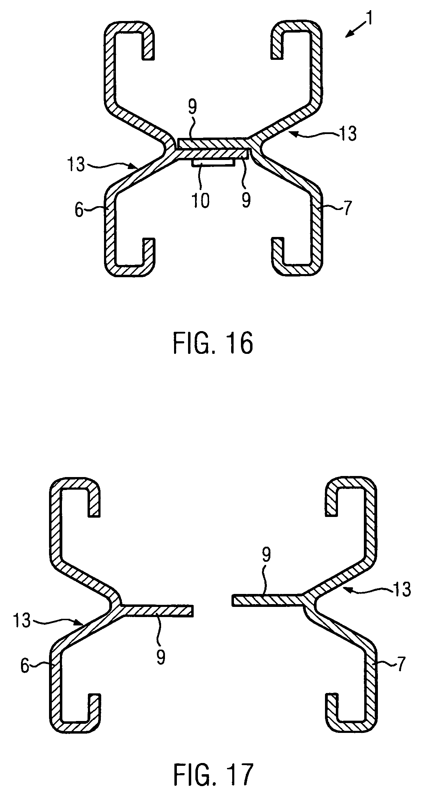

Die Fig. 14 bis 16 zeigen ein weiteres Ausführungsbeispiel einer erfindungsgemäßen Doppelschiene 1. Die beiden Profile 6 und 7 haben ähnlich wie die Profile der bereits zuvor erläuterten Doppelschienen einen hutförmigen Querschnitt. Bei diesem Ausführungsbeispiel ist die Hutform jedoch V-förmig ausgeführt. Im Unterschied zu der Doppelschiene aus den Fig. 1 bis 3 sind die Befestigungsabschnitte 9 der beiden Profile nicht parallel versetzt aus dem Blech des jeweiligen Profils herausgeprägt, sondern als Lasche aus dem Profil herausgebogen. Fig. 17 zeigt die beiden Profile 6 und 7 der Doppelschiene vor dem Fügeprozess jeweils im Querschnitt. Auch die aus dem jeweiligen Profil herausgebogenen Laschen 9 werden an den Laschen des jeweils anderen Profils im Durchsetzfügeverfahren befestigt.

Die Profile der erfindungsgemäßen Doppelschiene werden vorzugsweise aus Stahlblech hergestellt.

## Patentansprüche

1. Verfahren zur Herstellung einer Doppelschiene (1) mit zumindest zwei Schienen, nämlich einer ersten Schiene (2) und einer zweiten Schiene (3), wobei jede Schiene zwei Flanken (4) aufweist, die zwischen sich einen Öffnungsschlitz (5) definieren, durch den ein eingreifendes Montageelement in die Schiene (2, 3) eingeführt werden kann, wobei die Doppelschiene (1) aus zwei sich jeweils über die gesamte Länge der Doppelschiene (1) erstreckenden Profilen (6, 7), jeweils hergestellt aus einem profilierten, bandförmigen Metallblech (8), zusammengesetzt wird, **dadurch gekennzeichnet, dass** aus dem Metallblech (8) vor, während oder nach der Profilherstellung voneinander in Längsrichtung der späteren Doppelschiene (1) beabstandete Befestigungsabschnitte (9) herausgebogen werden, wobei die beiden Profile (6, 7) miteinander verbunden werden, indem die Befestigungsabschnitte (9) eines ersten Profils (6) an den Befestigungsabschnitten (9) eines zweiten Profils (7) befestigt werden.

2. Verfahren nach Anspruch 1, **dadurch gekennzeichnet, dass** die jeweils zu verbindenden Befestigungsabschnitte (9) mittels Durchsetzfügen aneinander befestigt werden.

3. Verfahren nach Anspruch 1 oder 2, **dadurch gekennzeichnet, dass** die Befestigungsabschnitte (9) vor oder beim Herausbiegen teilweise aus dem Metallblech (8) ausgeschnitten werden.

4. Verfahren nach Anspruch 3, **dadurch gekennzeichnet, dass** das Metallblech (8) an zwei gegenüberliegenden Seiten des Befestigungsabschnitts (9) eingeschnitten wird, wobei der Befestigungsabschnitt (9) mittels Tiefziehen aus dem Metallblech (8) herausgebogen wird, so dass ein beidseitig gekröpfter Befestigungsabschnitt (9) entsteht.

5. Verfahren nach Anspruch 3, **dadurch gekennzeichnet, dass** das Metallblech (8) an drei zusammenhängenden Seiten des Befestigungsabschnitts (9) eingeschnitten wird, wobei der Befestigungsabschnitt (9) als Lasche aus dem Metallblech (8) herausgebogen wird.

6. Verfahren nach einem der Ansprüche 3 bis 5, **dadurch gekennzeichnet, dass** das Ausschneiden und Herausbiegen der Befestigungsabschnitte in einer Stanzpresse (11) erfolgt.

7. Verfahren nach einem der Ansprüche 1 bis 6, **dadurch gekennzeichnet, dass** die Profilherstellung durch Kaltwalzprofilierung erfolgt.

8. Doppelschiene (1) mit zumindest zwei Schienen, nämlich einer ersten Schiene (2) und einer zweiten Schiene (3), wobei jede Schiene zwei Flanken (4) aufweist, die zwischen sich einen Öffnungsschlitz (5) definieren, durch den ein eingreifendes Montageelement in die Schiene (2, 3) einführbar ist, wobei die Doppelschiene (1) aus einem ersten Profil (6) und einem zweiten Profil (7) zusammengesetzt ist, wobei sich die beiden Profile (6, 7) jeweils über die gesamte Länge der Doppelschiene (1) erstrecken und jeweils aus einem profilierten, bandförmigen Metallblech (8) hergestellt sind, **dadurch gekennzeichnet, dass** die beiden Profile (6, 7) jeweils Befestigungsabschnitte (9) aufweisen, die in Längsrichtung der Doppelschiene (1) voneinander beabstandet und aus dem Metallblech (8) herausgebogen sind, wobei die beiden Profile (6, 7) miteinander verbunden sind, indem die Befestigungsabschnitte (9) des ersten Profils (6) an den Befestigungsabschnitten (9) des zweiten Profils (7) befestigt sind.

9. Doppelschiene (1) nach Anspruch 8, **dadurch gekennzeichnet, dass** das erste Profil (6) eine erste Flanke (4.1) der ersten Schiene (2) sowie eine erste Flanke (4.1) der zweiten Schiene (3) bildet, wobei das zweite Profil (7) eine zweite Flanke (4.2) der ersten Schiene (2) sowie eine zweite Flanke (4.2) der zweiten Schiene (3) bildet.

10. Doppelschiene (1) nach Anspruch 8, **dadurch gekennzeichnet, dass** jedes der beiden Profile (6, 7) zwischen den durch das jeweilige Profil (6, 7) gebildeten Flanken (4.1, 4.2) einen in Richtung auf das jeweils andere Profil (6, 7) hin zulaufenden Abschnitt (13) aufweist.

11. Doppelschiene (1) nach Anspruch 10, **dadurch gekennzeichnet, dass** der in Richtung auf das jeweils andere Profil (6, 7) hin zulaufende Abschnitt (13) beidseitig gekröpft ausgebildet ist.

12. Doppelschiene (1) nach Anspruch 10 oder 11, **dadurch gekennzeichnet, dass** der auf das zweite Profil (7) hin zulaufende Abschnitt (13) des ersten Profils (6) zumindest abschnittsweise parallel zu dem auf das erste Profil (6) hin zulaufenden Abschnitt (13) des zweiten Profils (7) verläuft.

13. Doppelschiene (1) nach einem der Ansprüche 10 bis 12, **dadurch gekennzeichnet, dass** die aus dem Metallblech (8) herausgebogenen Befestigungsabschnitte (9) in dem auf das jeweils andere Profil (6, 7) hin zulaufenden Abschnitt (13) ausgebildet sind.

14. Doppelschiene (1) nach einem der Ansprüche 8 bis 13, **dadurch gekennzeichnet, dass** die aus dem Metallblech (8) herausgebogenen und voneinander in Längsrichtung des jeweiligen Profils beabstandeten Befestigungsabschnitte (9) quer zur Längsrichtung des Profils (6, 7) zumindest teilweise unterschiedlich positioniert sind.

15. Doppelschiene (1) nach Anspruch 14, **dadurch gekennzeichnet, dass** jedes der beiden Profile (6, 7) in Längsrichtung des Profils (6, 7) betrachtet auf gleicher Position jeweils zwei Befestigungsabschnitte (9.1, 9.2) aufweist, wobei die beiden auf gleicher Position befindlichen Befestigungsabschnitte (9.1, 9.2) quer zur Längsrichtung des Profils (6, 7) voneinander beabstandet sind.

## Claims

1. A method for producing a twin rail (1) comprising at least two rails, viz. a first rail (2) and a second rail (3), each rail having two flanks (4) defining therebetween an opening slot (5) through which an engaging mounting element can be introduced in the rail (2, 3), the twin rail (1) being assembled from two profiles (6, 7), which each extend over the entire length of the twin rail (1) and which are each produced from a profiled, stripshaped sheet metal (8), **characterized in that,** during or after the production of the profile, fastening portions (9) are bent out from the sheet metal (8), said fastening portions (9) being spaced apart in the longitudinal direction of the future twin rail (1), and the two profiles (6, 7) being connected to one another by fastening the fastening portions (9) of a first profile (6) to the fastening portions (9) of a second profile (7).

2. The method according to claim 1, **characterized in that** the respective fastening portions (9) to be connected are fastened to one another by clinching.

3. The method according to claim 1 or 2, **characterized in that** the fastening portions (9) are partially cut out from the sheet metal (8) prior to or during the bending out operation.

4. The method according to claim 3, **characterized in that** the sheet metal (8) is cut in at two opposed sides of the fastening portion (9), the fastening portion (9) being bent out from the sheet metal (8) by means of deep-drawing so that a fastening portion (9) cranked on both sides thereof is formed.

5. The method according to claim 3, **characterized in that** the sheet metal (8) is cut in at three contiguous sides of the fastening portion (9), the fastening portion (9) being bent out from the sheet metal (8) as a lug.

6. The method according to one of the claims 3 to 5, **characterized in that** the fastening portions are cut and bent out in a punch press (11).

7. The method according to one of the claims 1 to 6, **characterized in that** the profiles are produced by means of cold roll forming.

8. A twin rail (1) comprising at least two rails, viz. a first rail (2) and a second rail (3), each rail having two flanks (4) defining therebetween an opening slot (5) through which an engaging mounting element can be introduced in the rail (2, 3), the twin rail (1) being assembled from a first profile (6) and a second profile (7), wherein each of said profiles (6, 7) extends over the entire length of the twin rail (1) and each of them is produced from a profiled, stripshaped sheet metal (8), **characterized in that** each of the two profiles (6, 7) includes fastening portions (9), which are spaced apart in the longitudinal direction of the twin rail (1) and bent out from the sheet metal (8), the two profiles (6, 7) being connected to one another **in that** the fastening portions (9) of the first profile (6) are fastened to the fastening portions (9) of the second profile (7).

9. The twin rail (1) according to claim 8, **characterized in that** the first profile (6) defines a first flank (4.1) of the first rail (2) as well as a first flank (4.1) of the second rail (3), and the second profile (7) defining a second flank (4.2) of the first rail (2) as well as a second flank (4.2) of the second rail (3).

10. The twin rail (1) according to claim 8, **characterized in that** each of the two profiles (6, 7) includes a portion (13) tapering towards the respective other profile (6, 7) and positioned between the flanks (4.1, 4.2) defined by the respective profile (6, 7).

11. The twin rail (1) according to claim 10, **characterized in that** the portion (13) tapering towards the respective other profile (6, 7) is configured such that it is cranked on both sides thereof.

12. The twin rail (1) according to claim 10 or 11, **characterized in that** the portion (13) of the first profile (6) tapering towards the second profile (7) extends, at least sectionwise, parallel to the portion (13) of the second profile (7) tapering towards the first profile (6).

13. The twin rail (1) according to one of the claims 10 to 12, **characterized in that** the fastening portions (9) bent out from the sheet metal (8) are formed in the portion (13) tapering towards the respective other profile (6, 7).

14. The twin rail (1) according to one of the claims 8 to 13, **characterized in that** the fastening portions (9) bent out from the sheet metal (8) and spaced apart in the longitudinal direction of the respective profile are, at least partially, differently positioned in a direction transversely to the longitudinal direction of the profile (6, 7).

15. The twin rail (1) according to claim 14, **characterized in that**, when seen in the longitudinal direction of the profile (6, 7), each of the two profiles (6, 7) has at equal positions two respective fastening portions (9.1, 9.2), the two fastening portions (9.1, 9.2) at equal positions being spaced apart in a direction transversely to the longitudinal direction of the profile (6, 7).

## Revendications

1. Procédé de fabrication d'un rail double (1) comprenant au moins deux rails, à savoir un premier rail (2) et un deuxième rail (3), chaque rail présentant deux flancs (4), qui définissent entre eux une fente d'ouverture (5) à travers laquelle un élément de montage peut être introduit dans le rail (2, 3) pour y venir en prise, le rail double (1) étant constitué de l'assemblage de deux profilés (6, 7) s'étendant chacun sur la totalité de la longueur du rail double (1) et fabriqués chacun à partir d'une tôle métallique (8) profilée, en forme de bande, **caractérisé en ce que** l'on replie hors de la tôle métallique (8), avant, pendant ou après la réalisation du profil, des tronçons de fixation (9) mutuellement espacés les uns des autres dans la direction longitudinale du rail double (1) ultérieur, les deux profilés (6, 7) étant assemblés ou reliés l'un à l'autre en fixant les tronçons de fixation (9) d'un premier profilé (6) aux tronçons de fixation (9) d'un deuxième profilé (7).

2. Procédé selon la revendication 1, **caractérisé en ce que** les tronçons de fixation (9) à relier ou assembler mutuellement, sont fixés l'un à l'autre par clinchage.

3. Procédé selon la revendication 1 ou la revendication 2, **caractérisé en ce que** les tronçons de fixation (9), avant ou pendant qu'ils sont repliés hors de la tôle métallique (8), sont découpés partiellement par incision de cette dernière.

4. Procédé selon la revendication 3, **caractérisé en ce que** la tôle métallique (8) est incisée sur deux côtés opposés du tronçon de fixation (9), le tronçon de fixation (9) étant replié hors de la tôle métallique (8) par emboutissage, de sorte que l'on obtient un tronçon de fixation (9) contre-coudé de deux côtés.

5. Procédé selon la revendication 3, **caractérisé en ce que** la tôle métallique (8) est incisée sur trois côtés successifs du tronçon de fixation (9), le tronçon de fixation (9) étant replié hors de la tôle métallique (8), sous forme de languette ou patte.

6. Procédé selon l'une des revendications 3 à 5, **caractérisé en ce que** le découpage ou l'incision et le pliage des tronçons de fixation s'effectuent dans une presse de découpage-emboutissage (11).

7. Procédé selon l'une des revendications 1 à 6, **caractérisé en ce que** la fabrication des profilés se fait par profilage par laminage à froid.

8. Rail double (1) comprenant au moins deux rails, à savoir un premier rail (2) et un deuxième rail (3), chaque rail présentant deux flancs (4), qui définissent entre eux une fente d'ouverture (5) à travers laquelle un élément de montage peut être introduit dans le rail (2, 3) pour y venir en prise, le rail double (1) étant constitué de l'assemblage d'un premier profilé (6) et d'un deuxième profilé (7), les deux profilés (6, 7) s'étendant chacun sur la totalité de la longueur du rail double (1) et étant fabriqués chacun à partir d'une tôle métallique (8) profilée, en forme de bande, **caractérisé en ce que** les deux profilés (6, 7) présentent chacun des tronçons de fixation (9), qui sont mutuellement espacés les uns des autres dans la direction longitudinale du rail double (1) et sont repliés hors de la tôle métallique (8), les deux profilés (6, 7) étant assemblés ou reliés l'un à l'autre par fixation des tronçons de fixation (9) du premier profilé (6) aux tronçons de fixation (9) du deuxième profilé (7).

9. Rail double (1) selon la revendication 8, **caractérisé en ce que** le premier profilé (6) forme un premier flanc (4.1) du premier rail (2) ainsi qu'un premier flanc (4.1) du deuxième rail (3), le deuxième profilé (7) formant un deuxième flanc (4.2) du premier rail (2) ainsi qu'un deuxième flanc (4.2) du deuxième rail (3).

10. Rail double (1) selon la revendication 8, **caractérisé en ce que** chacun des profilés (6, 7) présente entre les flancs (4.1, 4.2) formés par le profilé (6, 7) respectif, un tronçon (13) s'avançant en direction de l'autre profilé respectif (6, 7).

11. Rail double (1) selon la revendication 10, **caractérisé en ce que** le tronçon (13) s'avançant en direction de l'autre profilé respectif (6, 7) est d'une configuration coudée des deux côtés.

12. Rail double (1) selon la revendication 10 ou la revendication 11, **caractérisé en ce que** le tronçon (13) du premier profilé (6) s'avançant en direction du deuxième profilé (7), s'étend au moins en partie parallèlement au tronçon (13) du deuxième profilé (7) s'avançant en direction du premier profilé (6).

13. Rail double (1) selon l'une des revendications 10 à 12, **caractérisé en ce que** les tronçons de fixation (9) repliés hors de la tôle métallique (8) sont formés dans le tronçon (13) s'avançant en direction de l'autre profilé respectif (6, 7).

14. Rail double (1) selon l'une des revendications 8 à 13, **caractérisé en ce que** les tronçons de fixation (9) repliés hors de la tôle métallique (8) et espacés mutuellement les uns des autres dans la direction longitudinale du profilé respectivement considéré, sont positionnés, au moins partiellement, de manière différente transversalement à la direction longitudinale du profilé (6, 7).

15. Rail double (1) selon la revendication 14, **caractérisé en ce que** chacun des deux profilés (6, 7), vu dans la direction longitudinale du profilé (6, 7), présente, à la même position, respectivement deux tronçons de fixation (9.1, 9.2), les deux tronçons de fixation (9.1, 9.2) se trouvant dans la même position étant espacés l'un de l'autre transversalement à la direction longitudinale du profilé (6, 7).
